# EUROPEAN PATENT SPECIFICATION

(11) **EP 4 677 214 B1**
(45) Date of publication and mention of the grant of the patent: **16.09.2026**
(21) Application number: 23710853.5
(22) Date of filing: 09.03.2023
(51) Int. Cl.: F03B 17/00, F01K 11/00, F01K 25/10, F01K 27/00

(54) **PROCESS AND APPARATUS FOR THE PRODUCTION OF ELECTRIC POWER AVOIDING ENVIRONMENTAL WASTING**
VERFAHREN UND VORRICHTUNG ZUR ERZEUGUNG VON ELEKTRISCHER ENERGIE UNTER VERMEIDUNG VON UMWELTVERSCHWENDUNG
PROCÉDÉ ET APPAREIL POUR LA PRODUCTION D'ÉNERGIE ÉLECTRIQUE ÉVITANT LE GASPILLAGE ENVIRONNEMENTAL

(43) Date of publication of application: 14.01.2026
(73) Proprietor: Brizio, Adriana, 6927 Agra-Collina d'Oro (CH)
(72) Inventor: Brizio, Adriana, 6927 Agra-Collina d'Oro (CH)
(74) Representative: M. Zardi & Co S.A.
(86) International application number: PCT/EP2023/056001
(87) International publication number: WO 2024/183916

(56) References cited:
- WO-A2-2008/068491
- DE-A1- 102018 130 412
- US-A1- 2010 146 963
- US-A1- 2019 285 293

## Description

### Field of the invention

The invention relates to an apparatus and process for generation of electric power avoiding environmental wasting.

### Prior art

Most of the current systems for the production of electricity are nowadays provoking incommensurable damages to the health of planet, as they are causing pollution and/or overheating of the atmosphere, are using sources subjected to consumption until their possible exhaustion or, even worse, are resorting to the use of nuclear energy.

The reserves of fossil fuels such as coal, oil and natural gas are limited and non-renewable moreover, their combustion contributes to global warming. The generation in turn of energy through deforestation generates an increase in the greenhouse effect, while water is not everywhere available for powering hydroelectric plants.

The nuclear source presents serious risks when it is not perfectly managed and controlled. Moreover, it gives rise to serious and still unresolved problems connected to the disposal of radioactive waste. Moreover, the current technology relies on uranium which is a limited source.

The technologies for producing energy from renewable sources, including solar panels, photovoltaic panels or wind turbines, have the disadvantage of aleatory output mostly related to the possible absence of light, sun and wind. Besides, they have the non-negligible drawback of visual pollution because of the large aboveground surfaces that must be used for the installation of the photovoltaic, solar panels and because of the large size and considerable height of the wind turbines.

A low temperature gradient engine is described in US 2010/0146963. DE 10 2018 130412 discloses an energy conversion system designed to vaporize water at sub-atmospheric pressure.

### Summary of the invention

The present invention aims to a process and apparatus for generation of electric power which obviates the above-described drawbacks of the prior art. The present invention concerns a novel embodiment of the apparatus for generation of electric power which is described in the application PCT/EP2021/077238 of the same applicant.

The present invention aims to provide a process which does not generate any of the afore described problems, particularly no heating of the planet, no pollution, no deforestation, no dependence on coal, oil, water or uranium, no dependence on sun and wind presence. Besides, the invention aims to a process which can be performed in an underground structure to avoid visual pollution. Moreover, the invention aims to provide a process which does not cause any leakage of water or other kind of liquids into the environment.

These aims are reached with an apparatus and process according to the claims.

In the apparatus of the invention, an assembly is formed by two or more chambers interconnected by one or more communication ducts and preferably forming a closed circuit. A working medium is transferred between the chambers of the assembly and one or more magnetic elements are put into rotation by said working medium. One or more coils or solenoids produce an electric current in response to the rotation of said magnetic elements. According to a noticeable feature of the invention, said at least one rotating magnetic element is configured to rotate around an axis which is perpendicular to a longitudinal direction of said communication duct. At least one coil or solenoid is arranged around the communication duct so that the axis of rotation of the magnetic element is perpendicular to the axis of said coil or solenoid.

The invention relies on collecting and transforming the energy of the working medium travelling through the assembly from one chamber to a next chamber. The working medium, initially contained in a first chamber, is induced to travel to a next second chamber by means of heating the first chamber.

The working medium travels from one chamber to another in a liquid state or in a vapor state.

The passage of the working medium from a generic first chamber to a second chamber may be induced by the pressure of vapor formed in the first chamber, as a result of heating. Accordingly, the pressure will push the liquid away from the first chamber and towards the second chamber via a communication duct between them.

To facilitate the above process, the assembly is kept under vacuum, so that a relatively small input of heat is sufficient to vaporize the liquid medium in the first chamber and to establish a pressure which will expel the liquid away from the chamber, through the communication duct and into the second chamber. A similar principle can be observed in the so-called Franklin's Thermoscope. The invention uses this principle to produce energy by exploiting the energy contained in the working medium, preferably liquid, displaced in a liquid or vapor state from one chamber to another.

The invention uses at least one magnetic element to collect energy from the working medium. Said at least one magnetic element rotates under the action of the working medium while the working medium is transferred from a chamber to another. The apparatus of the invention may include one or more magnetic elements arranged to rotate under the thrust of the working medium. The rotation of the magnetic element(s) induces an electric current in the coil or solenoid wound around the connection duct. Accordingly, power is transferred from the rotating magnetic elements to the coil or solenoid. It can be seen that the invention allows to collect energy from the working medium displacing within a sealed environment.

The arrangement of the rotating element(s) with axis of rotation perpendicular to the communication duct, or perpendicular to a coil or solenoid wound around the connection duct, is an advantageous requisite in terms of efficiency. This arrangement of the rotating elements provides optimal exploitation of the energy of the working medium.

### Description of the invention

The assembly, particularly the working medium circuit, is maintained under vacuum. The higher is the vacuum degree produced in a closed chamber, the lower is the temperature at which a liquid contained in the same chamber starts its boiling process. The invention makes use of this principle to reduce the heat input required to bring to ebullition the working medium.

In a highly preferred embodiment, the chambers of the assembly form a closed circuit. By adopting a closed circuit, the energy necessary to create and maintain a vacuum condition inside said circuit is greatly reduced because the vacuum created initially in the closed circuit is maintained over time and subsequent energy input may be necessary only to compensate for small vacuum leakages, if any.

The working medium may be a pure liquid or a liquid mixture and has preferably a boiling point lower than the boiling point of water. For instance, ethyl alcohol or liquid ether can be used as working medium or in a mixture with the same.

The appropriate vacuum degree and the kind of the adopted liquid may be selected depending on the environmental conditions of any apparatus, that is the altitude and/or the outside ambient temperature.

The number of chambers and communication ducts in the assembly may vary. A simple embodiment is possible with two chambers and one communication duct between them. Other embodiments may include a greater number of chambers and/or of communication ducts between the chambers. Particularly, each pair of chambers may be connected by one or more communication ducts. In some embodiments, two adjoining chambers may be collected by a single duct. In other embodiments, adjoining chambers may be connected by two or more ducts. When multiple connection ducts are provided, one or more ducts may act as return ducts to provide a continuous circulation of the working medium.

In an embodiment, the assembly is configured so that one or more of the communication ducts act as connecting elements and/or structural supporting elements for two or more of the chambers.

In an embodiment, the assembly is configured so that the working medium effluent from a first chamber through a communication duct returns in the same first chamber either through the same communication duct or through a separate communication duct.

The assembly may include more than two chambers forming a sequence of chambers, wherein the working medium is transferred through the chambers. Each transfer can be regarded as a transfer of the working medium from a first chamber or starting chamber to a second chamber or destination chamber, next to the first chamber in the sequence, the transfer of the working medium being operated as a result of heating the starting chamber.

In an interesting embodiment of the invention, the sequence of chambers forms a closed circuit and the process is performed cyclically while the working medium traverses the closed-circuit sequence of chambers. Hence for example a working medium may start the process from a first chamber and after passages through several chambers in the assembly, may return into the same first chamber.

In some embodiments, suitable barriers are provided in connection with the chambers and/or with the communication ducts, said barriers being driven to prevent a backflow of the working medium from one chamber to a preceding chamber. Hence it is provided that the working medium follows the proper direction from a starting chamber through a destination chamber in the assembly.

The energy conversion device of the assembly comprises at least one rotating magnetic element. The energy conversion device of the assembly further includes one or more coil(s) or solenoid(s) inductively coupled with the magnetic element (s). A rotation of the magnetic elements induces an electric current in the coils or solenoids.

The magnetic element is oriented in such a way that the rotation of the element takes place around an axis perpendicular to the communication duct. At least one coil or solenoid is arranged around a communication duct and the axis of rotation of at least one magnetic element, which is placed inside the communication duct, is perpendicular to the axis of said coil or solenoid.

According to embodiment of the invention, said at least one rotating magnetic element has blades made of a magnetized material or suitable magnetic elements are placed on two or more blades of the rotating element.

According to an embodiment, said at least one rotating magnetic element is supported by a bearing bar installed in the communication duct.

The communication duct may include internal vanes arranged to direct the working medium towards the rotating element(s).

Preferably, said support bar is fixed to the communication duct and the at least one magnetic element rotates relative to the bar. For example a magnetic element may be mounted on a pin for rotation pivoted on said bar.

In an embodiment, said support bar rotates within the communication duct and one or more gears are arranged on said bar such as to impose on the rotating magnetic element(s) a rotation around an axis perpendicular to the communication duct or perpendicular to the axis of a coil or solenoid wound around the communication duct.

Said communication duct may have a circular cross section or a different shape. For example, in some embodiments the communication duct may have a square or rectangular cross section, possibly with rounded edges to facilitate winding of the coil or solenoid around the communication duct. The communication duct may be in the shape of a communication tube.

An inside surface of the communication duct may act as a supporting bar.

A coil or solenoid may be located in a position adjacent and preferably wrapped onto an enclosure within which the rotating magnetic element is disposed to rotate. Alternatively, a coil or solenoid constitute itself an enclosure within which said rotating magnetic element is disposed to rotate. For example, a coil may structurally constitute a communication duct between two chambers.

According to necessity, some or all portions of the assembly of the invention may be differently wrapped. One or more of said portion or portions may be wrapped by one or more solenoid or solenoids, or by coils and solenoids together, while some of said portions are formed by the afore described coils and/or solenoid or solenoids themselves, as well as some of said portions may be without any wrapping.

In an embodiment, said magnetic elements include permanent magnets.

Said communication duct(s) is/are made preferably of a magnetic conductive material, that is a material having appropriate magnetic conductivity.

An embodiment includes at least one communication duct wherein a coil or solenoid is wrapped around the duct or a coil or solenoid constitutes the communication duct.

An embodiment includes a plurality of coils or solenoids, wherein at least some of the coils or solenoids are electrically connected to each other.

The invention is now further elucidated with reference to various embodiments of the same.

In the various embodiments, the communication ducts may be in the form of a tube. Said tube puts into communication the cavities of said opposite chambers, said tube being of proper length, diameter and shape.

The whole ensemble is liquid and gas sealed.

A working medium in the form of a liquid is inserted into the aforesaid ensemble before sealing and is preferably gathered into a first chamber. The volume of the liquid will be less than the whole inside volume of the ensemble in such a size that the liquid can freely flow within the afore described communication tube from one chamber to another chamber in communication with the first one.

A proper vacuum degree is provided inside said ensemble before sealing, to such an extent that a minimal heating energy is requested to force said liquid to start its boiling process, consequently to find an escape route, in a liquid or vapor shape, from the aforesaid first chamber through the afore described communication tube. Particularly, the heat input is lower than the heat input necessary to induce boiling at the ordinary ambient conditions outside the assembly of the invention.

Both providing a vacuum degree, and selecting a liquid having a boiling point lower than the water boiling point, may be conveniently adopted in combination.

After matching the above-described conditions, heating is applied to the liquid which is collected into a first chamber, to such an extent as to induce the same liquid to start boiling.

Having provided, as above described, a duct in the form of a tube departing from said first chamber and putting into communication said first chamber with an opposite communicating one, said liquid finds its escape route through said tube duct to collect into the opposite communicating chamber.

Depending on the position of the afore described tube duct in the respect of the afore described chambers, said liquid may found its escape maintaining its liquid consistency, or said liquid assumes under heating a vapor consistency and it becomes liquid again, due to condensation, once collected in an opposite chamber.

In an embodiment the afore described communication tube duct is positioned in a lower portion of the chambers wall in such a way that, in consequence of heating, said liquid displaces from a first chamber to a following one while keeping its liquid state.

Once the aforesaid liquid has collected into an opposite communicating chamber through the afore described communication tube duct, heating can be again applied to said liquid to such an extent that it is forced to find a further escape from said opposite communicating chamber. In this way, by applying the heating consecutively to one chamber and to a communicating one, a consecutive displacement of said liquid is originated.

In an embodiment, an assembly is composed by two opposite chambers and is structured in such a way that the liquid, when subjected again to heating after having collected into the afore described opposite communicating chamber, has no further escape but going back to collect into the aforesaid first chamber. A return connection tube duct may be provided to this purpose.

The afore described coil/coils and/or said solenoid/solenoids may be located in a position adjacent and preferably wrapped onto the portion or portions of the aforesaid assembly within which the rotating magnetic element/elements is/are induced to rotate. In such a case said portion/portions will be conveniently made of a material with appropriate magnetic conductivity.

Alternatively, said coil/coils and/or said solenoid or solenoids themselves are shaped, twisted and positioned in such an intimate, reciprocal closeness as to constitute themselves part of the ensemble portion within which said magnetic element or elements is/are induced to rotate.

In the event that the aforesaid chambers and tube ducts constitute a closed circuit, the induced electricity may be accumulated from any coil or coils and/or solenoid/solenoids to give place to a final output quantity.

It should be noted that, once the initial chamber has been heated by means of external sources, the energy necessary to heat the subsequent chambers is much lower than the energy initially used, since the working medium that moves from one chamber to another loses only a small degree of heat.

Moreover, the apparatus is able of partially self-feeding by employing part of the final electric energy, outgoing from the same, in order to repeat from the beginning the heating of the same apparatus chambers.

Conveniently the heating degree, at which magnetic elements will be subjected, shall not be higher than the temperature degree at which said elements lose their magnetic charge. In any case it is advisable that the temperature degree will not reach the Curie Point relative to said magnetic elements.

Should said elements lose their magnetic charge, owing to a special case or to deterioration of the plants due to age, said elements will be subjected to a re-magnetization process, resorting to known means.

### Description of the figures

Fig. 1 is a schematic representation of an apparatus for generating electric power according to an embodiment of the invention with a dual-chamber configuration.
Fig. 2 is a schematic representation of an apparatus according to an embodiment of the invention with a closed-circuit configuration.
Fig. 3 is a schematic representation of an apparatus according to an embodiment of the invention with a multiple-chambers configuration.
Fig. 4 is a schematic representation of an apparatus according to an embodiment of the invention with a closed-circuit configuration and multiple chambers.
Fig. 5 illustrates a preferred embodiment of energy conversion device in accordance with the invention.

### Detailed description of preferred embodiments

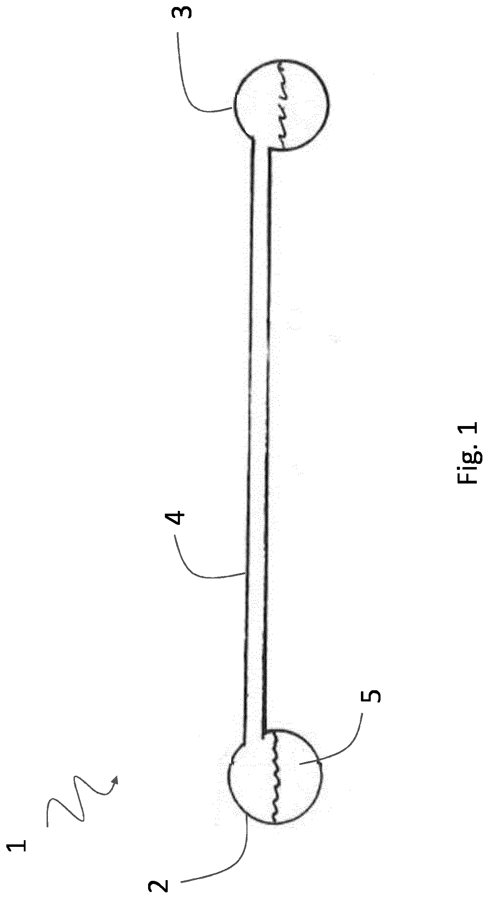

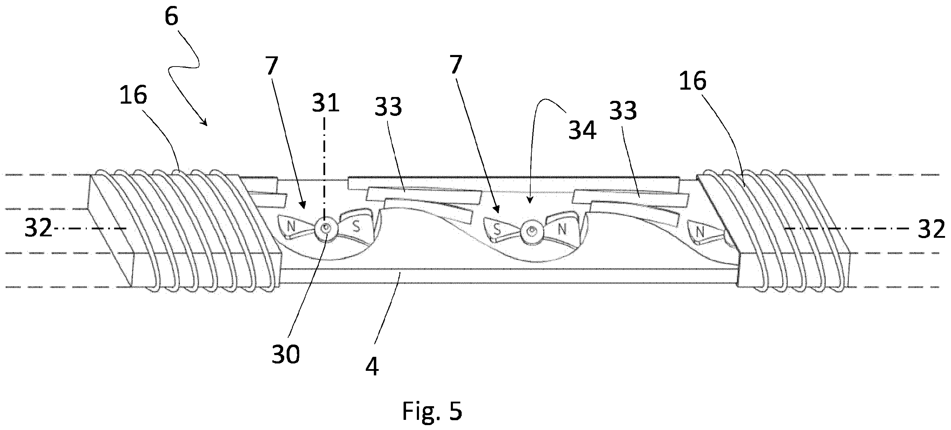

Figs. 1 to 4 illustrate different configurations of chambers and connection ducts. Fig. 5 illustrates an example of an energy conversion device that can be used in any of the embodiments of Figs. 1 to 4.

Fig. 1 illustrates an apparatus for generating electric power with a sealed assembly 1 including a first chamber 2, a second chamber 3 and a communication duct 4. A liquid working medium 5 is contained in said first chamber 2.

The apparatus works by heating the first chamber 2 and the working medium 5 contained therein, to promote a transfer of said working medium 5 from said first chamber 2 to said second chamber 3 via said communication tube 4. The energy of the working medium is transformed into electric power by means of rotating magnetic elements contained in the communication duct 4 and coils or solenoids wound around said duct 4. Once the working medium 5 is collected in the second chamber 3 in form of a liquid, said second chamber 3 may be heated to transfer the working medium 5 back into the first chamber 2. The process can be repeated cyclically.

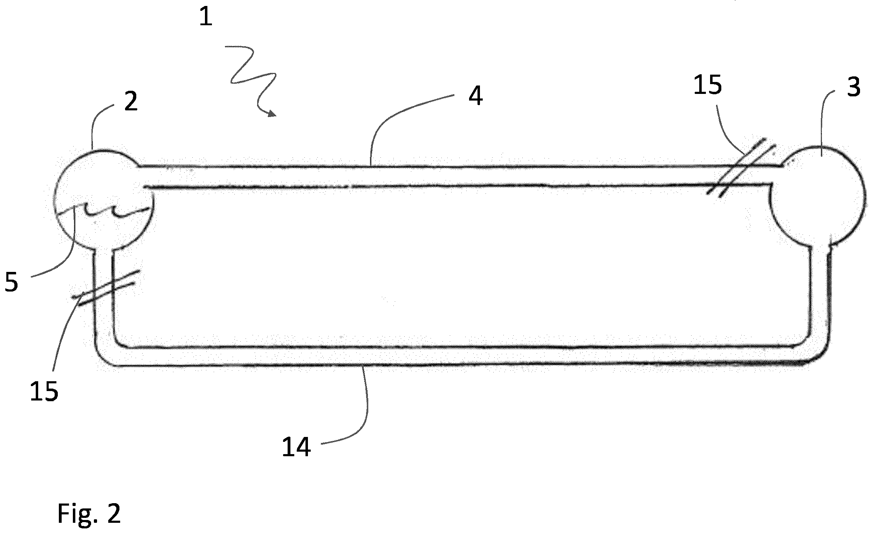

Fig. 2 shows an embodiment with a return path between the chambers 2 and 3. The first chamber 2 of the apparatus is in fluid communication with the second chamber 3 by means of the above-mentioned communicating duct 4 and by means of a separate return duct 14.

The assembly 1 is also provided with two barriers 15 in connection with the communication duct 4 and with the return duct 14. Said barriers 15 are arranged to prevent the backflow of the working medium 5 from one chamber to the preceding one.

In the embodiment of Fig. 2, the first chamber 2 is heated to transfer the working medium 5 to the second chamber 3 meanwhile generating electric power. Afterwards, the second chamber 3 is heated to transfer the working medium 5 back into the first chamber 2 via the return duct 14. The process can be repeated cyclically thereby obtaining a continuous production of electric power.

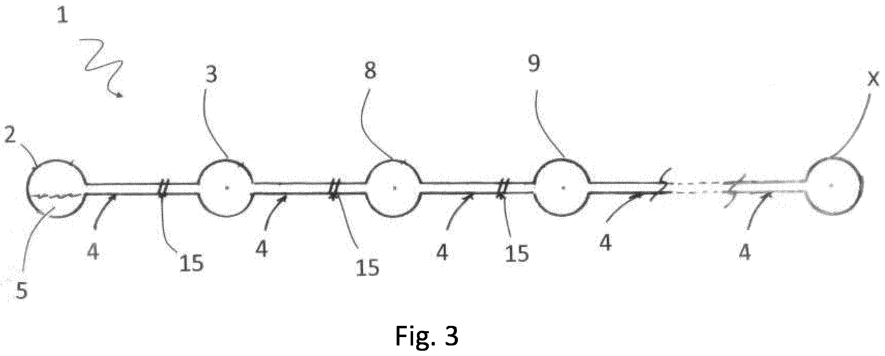

Fig. 3 illustrates an embodiment with multiple chambers 2, 3, 8 and 9. Each chamber is connected to adjacent chamber(s) through a communication duct 4. Each communication duct 4 is provided with a barrier 15 to prevent backflow. The last portion of tube 4 indicates the possibility of adopting additional chambers, until a last chamber denoted by X in the figure, provided that the whole ensemble is sealed. Preferably said last chamber denoted by X is connected to the first chamber 1.

In this embodiment, heating is applied in sequence first to the first chamber 2 to drive the working fluid 5 to the second chamber 3 meanwhile generating electric power. Afterwards, the process is repeated in sequence by providing heat to the second chamber 3 to transfer the working fluid 5 to a third chamber 8 meanwhile generating electric power. The process is repeated again in sequence with the remaining chamber 9 and possible following ones. As in Fig. 1, the working medium 5 can be transferred back by heating the chambers in a reverse sequence.

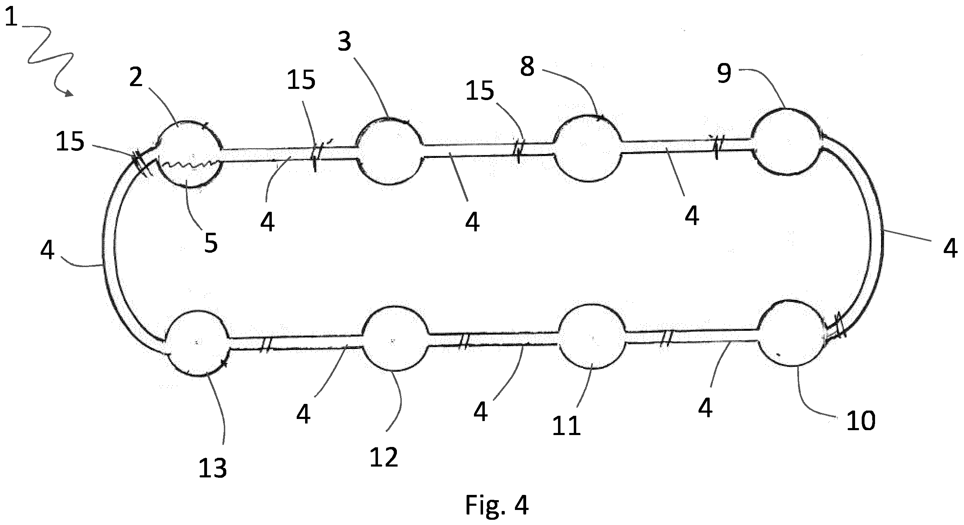

Fig. 4 shows a variation of the embodiment of Fig. 3 wherein multiple chambers are arranged in a closed-circuit configuration. As in Fig. 2, by heating the chambers in the appropriate sequence, the working medium 5 can circulate continuously in the assembly.

It has to be noted that Fig. 4 illustrates one duct 4 to connect each pair of adjacent chambers, however in other embodiments more than one duct may be provided between adjacent chambers.

Fig. 5 illustrates a preferred embodiment of the energy conversion device 6 associated with a communication duct 4. The communication duct 4 is wrapped with solenoids 16 inductively coupled with magnetic rotors 7 mounted inside the duct 4. Each magnetic rotor 7 is a two-bladed rotor and is mounted on a pin 30 in such a way to rotate around an axis 31. Said axis 31 is perpendicular to the longitudinal axis 32 of the duct 4 and, consequently, also perpendicular to the axis of the solenoids 16.

For example, if the duct 4 is arranged horizontally, the rotors 7 rotate in a horizontal plane around a vertical axis.

In the example, the two blades of each rotor 7 constitute opposite magnetic poles. In other embodiments (not shown) each rotor 7 may have a greater number of blades, preferably with blades of a magnetic pole alternate to blades of the opposite pole.

The communication duct 4 has sets of vanes 33 configured to direct the working medium to the rotors 7.

The rotors 7 are mounted on an inner surface 34 of the communication duct. In other embodiments the rotors 7 may be associated to a support bar. Said support bar is preferably fixed to the duct 4.

In the example of the figure, the communication duct has a rectangular cross section; other shapes of the duct are possible in the various embodiments of the invention.

In operation, the solenoids 16 produce electric power due to the magnetic interaction with rotors 7. It should be noted that power is transferred from inside to the outside of the assembly via the interaction between the rotating magnets and the coils or solenoids. More in detail, a rotation of a rotor 7 relative to the solenoid 16 is induced by the thrust of the working medium 5 when the medium travels from one chamber to another chamber of the assembly 1. The rotor 7 can be regarded as a propeller-like turbine. The consequent rotation of the magnetic poles 25 induces an electric current in the solenoid 16.

Thanks to the inductive coupling, power is transferred from the magnetic rotor 7 inside the duct 4 to the solenoid 16 outside the duct 4 in a contactless manner without the need of connection means passing through the duct.

## Claims

1. Apparatus for generation of electric power comprising:
a sealed assembly (1) including at least two chambers (2, 3) and a communication duct (4), wherein the communication duct (4) is arranged to provide fluid communication between said two chambers (2, 3);
a working medium (5) in a liquid state contained in at least one of said chambers (2, 3);
wherein a vacuum condition is provided in the assembly (1), so that the boiling temperature of said liquid working medium (5) in the assembly (1) is lower than the boiling temperature of the same liquid at ambient pressure;
wherein the volume of said liquid working medium (5) is less than the inner capacity of the whole assembly;
wherein the apparatus is configured in such a way that heating the liquid working medium (5) contained in a first chamber (2) of the assembly induces a transfer of the working medium (5), either in liquid state or in a vapor state, from said first chamber (2) to a second chamber (3) of the assembly, through a communication duct (4) between said first chamber (2) and second chamber (3);
the apparatus further comprising at least one energy conversion device (6) arranged in the communication duct (4) and configured to transform energy of the working medium (5) travelling through the apparatus into an electric power output,
wherein said energy conversion device includes at least one magnetic element (7), said at least one magnetic element being arranged to enter into direct contact with the working medium,
wherein said at least one magnetic element (7) being a rotating magnetic element (7) which is located in the communication duct (4) and is arranged to rotate under the thrust of said working medium (5) when said working medium (5) travels through the communication duct (4) from one chamber to another chamber,
wherein the apparatus includes at least one coil or solenoid (16) which is inductively coupled with said rotating magnetic element (7), so that a rotation of said rotating magnetic element (7) induces an electric current in the coil or solenoid (16),
wherein said at least one rotating magnetic element (7) is configured to rotate around an axis (31) which is perpendicular to the axis (32) of said coil or solenoid.

2. Apparatus according to claim 1 wherein said at least one rotating magnetic element (7) has blades made of a magnetized material or wherein magnetic elements are placed on two or more blades of the rotating element.

3. Apparatus according to any of the previous claims wherein said at least one rotating magnetic element (7) is supported on an inner surface (34) of said communication duct (4) or is supported by a bearing bar installed in the communication duct.

4. Apparatus according to any of the previous claims wherein the communication duct (4) includes internal vanes (33) arranged to direct the working medium towards the rotating element(s).

5. Apparatus according to any of the previous claims wherein said at least one rotating magnetic element is associated to a support bar, wherein said support bar rotates within the communication duct and one or more gears are arranged on said bar such as to impose on the rotating magnetic element(s) a rotation around an axis perpendicular to the communication duct and/or perpendicular to the axis of the coil or solenoid wound around the communication duct.

6. Apparatus according to any of the previous claims, said communication duct (4) having a circular, square or rectangular cross section, possibly with rounded edges to facilitate winding of the coil or solenoid around the communication duct.

7. Apparatus according to any of the previous claims wherein said liquid working medium (5) is a pure liquid or a liquid mixture and has a boiling point lower than the boiling point of water.

8. Apparatus according to any of the previous claims wherein said assembly (1) is configured so that one or more of the communication ducts (4) act as connecting elements and/or supporting elements for two or more of the chambers (2, 3, 8 to 13).

9. Apparatus according to any of the previous claims wherein the assembly (1) is configured so that the working medium (5) effluent from said first chamber (2) through a communication duct (4) returns in the same first chamber (2) either through the same communication duct (4) or through a separate communication duct (14).

10. Apparatus according to any of the previous claims wherein said assembly (1) includes more than two chambers forming a sequence of chambers, and wherein the working medium (5) is transferred through the chambers by means of a plurality of transfer steps, each step being a transfer from a first chamber to a second chamber next to the first chamber in the sequence, the transfer of the working medium (5) being operated as a result of heating in sequence any of the chambers of the apparatus.

11. Apparatus according to claim 10 wherein the sequence of chambers forms a closed circuit and the process is performed cyclically while the working medium (5) traverses the closed-circuit sequence of chambers.

12. Apparatus according to any of the previous claims wherein one or more barriers (15) are provided in connection with the chambers and/or with the communication ducts (4), said barriers (15) being driven to prevent a backflow of the working medium (5) from one chamber to a preceding chamber.

13. Apparatus according to any of the previous claims wherein said magnetic elements (7) include permanent magnets.

14. Apparatus according to any of the previous claims wherein said communication duct(s) (4) is/are made of a material with appropriate magnetic conductivity.

15. Apparatus according to any of the previous claims including at least one communication duct (4) wherein the coil or solenoid (16) is wrapped around said duct, or the coil or solenoid constitutes said communication duct (4).

16. Apparatus according to any of the previous claims, comprising a plurality of coils or solenoids (16), wherein at least some of the coils or solenoids are electrically connected to each other.

17. A process for the production of electric power in an apparatus according to any of the previous claims, the process comprising:
providing the sealed assembly (1) including at least two chambers (2, 3) and a communication duct (4), wherein the communication duct (4) is arranged to provide fluid communication between said two chambers (2, 3);
providing a working medium (5) in a liquid state contained in at least one of said chambers (2, 3);
forming a vacuum condition in the assembly (1), so that the boiling temperature of said liquid working medium (5) in the assembly is lower than the boiling temperature of the same liquid at ambient pressure;
heating the liquid working medium (5) contained in a first chamber (2) of the assembly so to induce a transfer of the working medium from said first chamber (2) to a second chamber (3) of the assembly (1), through the communication duct (4) between said first chamber (2) and second chamber (3);
transforming energy of the working medium travelling through the apparatus into a power output by means of an energy conversion device (6) arranged in the communication duct (4), wherein said device (6) includes at least one magnetic element (7) arranged to enter into direct contact with the working medium and to rotate upon contact with the working medium;
said at least one magnetic element being a rotating magnetic element (7) which is located in the communication duct (4) and is arranged to rotate under the thrust of said working medium (5) when said working medium (5) travels through the communication duct (4) from one chamber to another chamber;
the apparatus including at least one coil or solenoid (16) which is inductively coupled with said rotating magnetic element (7), so that a rotation of said rotating magnetic element (7) induces an electric current in the coil or solenoid (16),
wherein said at least one rotating magnetic element (7) rotates around an axis (31) which is perpendicular to the axis (32) of said coil or solenoid,
wherein the working medium (5) is transferred from said first chamber (2) to said second chamber (3) in a liquid state or in a gaseous state.

18. A process according to claim 17, wherein after heating of the first chamber (2) and transfer of the working medium (5) to the second chamber (3), the second chamber (3) is heated and the working medium (5) is transferred back into the first chamber (2), and the sequence is repeated cyclically.

19. A process according to claim 17 or 18 wherein, during the process, the working medium (5) has a temperature below the Curie point of any magnetic element of the energy conversion device (6) to avoid de-magnetization.

## Patentansprüche

1. Vorrichtung zur Erzeugung elektrischer Energie, umfassend:
eine abgedichtete Anordnung (1) aufweisend mindestens zwei Kammern (2, 3) und einen Verbindungskanal (4), wobei der Verbindungskanal (4) eingerichtet ist, eine Fluidverbindung zwischen den beiden Kammern (2, 3) bereitzustellen;
ein in mindestens einer der Kammern (2, 3) enthaltenes Arbeitsmedium (5) in einem flüssigen Zustand;
wobei ein Vakuumzustand in der Anordnung (1) bereitgestellt ist, sodass die Siedetemperatur des flüssigen Arbeitsmediums (5) in der Anordnung (1) niedriger ist als die Siedetemperatur derselben Flüssigkeit bei Umgebungsdruck;
wobei das Volumen des flüssigen Arbeitsmediums (5) kleiner ist als die Innenkapazität der gesamten Anordnung;
wobei die Vorrichtung derart eingerichtet ist, dass Erwärmen des in einer ersten Kammer (2) der Anordnung enthaltenen flüssigen Arbeitsmediums (5) eine Übertragung des Arbeitsmediums (5), entweder im flüssigen Zustand oder in einem dampfförmigen Zustand, von der ersten Kammer (2) zu einer zweiten Kammer (3) der Anordnung durch einen Verbindungskanal (4) zwischen der ersten Kammer (2) und der zweiten Kammer (3) veranlasst;
wobei die Vorrichtung ferner mindestens eine Energieumwandlungsvorrichtung (6) umfasst, die in dem Verbindungskanal (4) angeordnet ist und eingerichtet ist, Energie des sich durch die Vorrichtung bewegenden Arbeitsmediums (5) in eine elektrische Ausgangsleistung umzuwandeln,
wobei die Energieumwandlungsvorrichtung mindestens ein magnetisches Element (7) aufweist, wobei das mindestens eine magnetische Element angeordnet ist, um in direkten Kontakt mit dem Arbeitsmedium zu treten,
wobei das mindestens eine magnetische Element (7) ein rotierendes magnetisches Element (7) ist, das in dem Verbindungskanal (4) angeordnet ist und eingerichtet ist, sich unter dem Schub des Arbeitsmediums (5) zu drehen, wenn sich das Arbeitsmedium (5) durch den Verbindungskanal (4) von einer Kammer zu einer anderen Kammer bewegt,
wobei die Vorrichtung mindestens eine Spule oder ein Solenoid (16) aufweist, die oder das induktiv mit dem rotierenden magnetischen Element (7) gekoppelt ist, so dass eine Drehung des rotierenden magnetischen Elements (7) einen elektrischen Strom in der Spule oder dem Solenoid (16) verursacht,
wobei das mindestens eine rotierende magnetische Element (7) eingerichtet ist, sich um eine Achse (31) zu drehen, die senkrecht zu der Achse (32) der Spule oder des Solenoids ist.

2. Vorrichtung nach Anspruch 1, wobei das mindestens eine rotierende magnetische Element (7) Blätter hergestellt aus einem magnetisierten Material aufweist oder wobei magnetische Element an zwei oder mehr Blättern des rotierenden Elements angeordnet sind.

3. Vorrichtung nach einem der vorstehenden Ansprüche, wobei das mindestens eine rotierende magnetische Element (7) an einer Innenfläche (34) des Verbindungskanals (4) gehalten ist oder durch einen in dem Verbindungskanal installierten Tragstab gehalten ist.

4. Vorrichtung nach einem der vorstehenden Ansprüche, wobei der Verbindungskanal (4) innere Schaufeln (33) umfasst, die angeordnet sind, um das Arbeitsmedium in Richtung des/der rotierenden Elements/Elemente zu leiten.

5. Vorrichtung nach einem der vorstehenden Ansprüche, wobei das mindestens eine rotierende magnetische Element einem Stützstab zugeordnet ist, wobei sich der Stützstab innerhalb des Verbindungskanals dreht und ein oder mehrere Zahnräder an dem Stab angeordnet sind, um dem/den rotierenden magnetischen Element(en) eine Drehung um eine Achse aufzuerlegen, die senkrecht zu dem Verbindungskanal und/oder senkrecht zu der Achse der um den Verbindungskanal gewickelten Spule oder des um den Verbindungskanal gewickelten Solenoids ist.

6. Vorrichtung nach einem der vorstehenden Ansprüche, wobei der Verbindungskanal (4) einen kreisförmigen, quadratischen oder rechteckigen Querschnitt aufweist, optional mit abgerundeten Kanten, um ein Wickeln der Spule oder des Solenoids um den Verbindungskanal zu erleichtern.

7. Vorrichtung nach einem der vorstehenden Ansprüche, wobei das flüssige Arbeitsmedium (5) eine reine Flüssigkeit oder ein Flüssigkeitsgemisch ist und einen Siedepunkt unter dem Siedepunkt von Wasser aufweist.

8. Vorrichtung nach einem der vorstehenden Ansprüche, wobei die Anordnung (1) derart eingerichtet ist, dass einer oder mehrere der Verbindungskanäle (4) als Verbindungselemente und/oder Stützelemente für zwei oder mehr der Kammern (2, 3, 8 bis 13) fungieren.

9. Vorrichtung nach einem der vorstehenden Ansprüche, wobei die Anordnung (1) derart eingerichtet ist, dass das aus der ersten Kammer (2) durch einen Verbindungskanal (4) austretende Arbeitsmedium (5) in dieselbe erste Kammer (2) entweder durch denselben Verbindungskanal (4) oder durch einen separaten Verbindungskanal (14) zurückkehrt.

10. Vorrichtung nach einem der vorstehenden Ansprüche, wobei die Anordnung (1) mehr als zwei Kammern aufweist, die eine Folge von Kammern bilden, und wobei das Arbeitsmedium (5) mittels einer Mehrzahl von Übertragungsschritten durch die Kammern übertragen wird, wobei jeder Schritt eine Übertragung von einer ersten Kammer zu einer zweiten Kammer neben der ersten Kammer in der Folge ist, wobei die Übertragung des Arbeitsmediums (5) infolge einer aufeinanderfolgenden Erwärmung jeder der Kammern der Vorrichtung erfolgt.

11. Vorrichtung nach Anspruch 10, wobei die Folge von Kammern einen geschlossenen Kreislauf bildet und das Verfahren zyklisch durchgeführt wird, während das Arbeitsmedium (5) die geschlossene Kreislauf-Folge von Kammern durchläuft.

12. Vorrichtung nach einem der vorstehenden Ansprüche, wobei eine oder mehrere Barrieren (15) in Verbindung mit den Kammern und/oder mit den Verbindungskanälen (4) vorgesehen sind, wobei die Barrieren (15) betrieben werden, um einen Rückfluss des Arbeitsmediums (5) von einer Kammer zu einer vorhergehenden Kammer zu verhindern.

13. Vorrichtung nach einem der vorstehenden Ansprüche, wobei die magnetischen Elemente (7) Permanentmagnete aufweisen.

14. Vorrichtung nach einem der vorstehenden Ansprüche, wobei der/die Verbindungskanal/Verbindungskanäle (4) aus einem Material mit geeigneter magnetischer Leitfähigkeit hergestellt ist/sind.

15. Vorrichtung nach einem der vorstehenden Ansprüche aufweisend mindestens einen Verbindungskanal (4), wobei die Spule oder das Solenoid (16) um den Kanal gewickelt ist oder die Spule oder das Solenoid den Verbindungskanal (4) bildet.

16. Vorrichtung nach einem der vorstehenden Ansprüche, umfassend eine Mehrzahl von Spulen oder Solenoiden (16), wobei zumindest einige der Spulen oder Solenoiden elektrisch miteinander verbunden sind.

17. Verfahren zur Erzeugung elektrischer Energie in einer Vorrichtung nach einem der vorstehenden Ansprüche, wobei das Verfahren umfasst:
Bereitstellen der abgedichteten Anordnung (1) aufweisend mindestens zwei Kammern (2, 3) und einen Verbindungskanal (4), wobei der Verbindungskanal (4) eingerichtet ist, eine Fluidverbindung zwischen den beiden Kammern (2, 3) bereitzustellen;
Bereitstellen eines in mindestens einer der Kammern (2, 3) enthaltenes Arbeitsmediums (5) in einem flüssigem Zustand;
Herstellen eines Vakuumzustands in der Anordnung (1), so dass die Siedetemperatur des flüssigen Arbeitsmediums (5) in der Anordnung niedriger ist als die Siedetemperatur derselben Flüssigkeit bei Umgebungsdruck;
Erwärmen des in einer ersten Kammer (2) der Anordnung enthaltenen flüssigen Arbeitsmediums (5), um eine Übertragung des Arbeitsmediums von der ersten Kammer (2) zu einer zweiten Kammer (3) der Anordnung (1) durch den Verbindungskanal (4) zwischen der ersten Kammer (2) und der zweiten Kammer (3) zu verursachen;
Umwandeln von Energie des sich durch die Vorrichtung bewegenden Arbeitsmediums in eine Ausgangsleistung mittels einer in dem Verbindungskanal (4) angeordneten Energieumwandlungsvorrichtung (6), wobei die Vorrichtung (6) mindestens ein magnetisches Element (7) aufweist, das angeordnet ist, um in direkten Kontakt mit dem Arbeitsmedium zu treten und sich bei Kontakt mit dem Arbeitsmedium zu drehen;
wobei das mindestens eine magnetische Element ein rotierendes magnetisches Element (7) ist, das in dem Verbindungskanal (4) angeordnet ist und eingerichtet ist, sich unter dem Schub des Arbeitsmediums (5) zu drehen, wenn sich das Arbeitsmedium (5) durch den Verbindungskanal (4) von einer Kammer zu einer anderen Kammer bewegt;
wobei die Vorrichtung mindestens eine Spule oder ein Solenoid (16) aufweist, die oder das induktiv mit dem rotierenden magnetischen Element (7) gekoppelt ist, so dass eine Drehung des rotierenden magnetischen Elements (7) einen elektrischen Strom in der Spule oder dem Solenoid (16) verursacht,
wobei sich das mindestens eine rotierende magnetische Element (7) um eine Achse (31) dreht, die senkrecht zu der Achse (32) der Spule oder des Solenoids ist,
wobei das Arbeitsmedium (5) in einem flüssigem oder in einem gasförmigem Zustand von der ersten Kammer (2) zu der zweiten Kammer (3) übertragen wird.

18. Verfahren nach Anspruch 17, wobei nach Erwärmen der ersten Kammer (2) und Übertragen des Arbeitsmediums (5) zu der zweiten Kammer (3) die zweite Kammer (3) erwärmt und das Arbeitsmedium (5) zurück in die erste Kammer (2) übertragen wird und der Ablauf zyklisch wiederholt wird.

19. Verfahren nach Anspruch 17 oder 18, wobei während des Verfahrens das Arbeitsmedium (5) eine Temperatur unter dem Curie-Punkt von jedem magnetischen Element der Energieumwandlungsvorrichtung (6) aufweist, um Entmagnetisierung zu vermeiden.

## Revendications

1. Appareil de génération de puissance électrique comportant :
un ensemble scellé (1) incluant au moins deux chambres (2, 3) et un conduit de communication (4), dans lequel le conduit de communication (4) est agencé pour assurer une communication fluidique entre lesdites deux chambres (2, 3) ;
un milieu de travail (5) à l'état liquide contenu dans au moins l'une desdites chambres (2, 3) ;
dans lequel une condition de vide est prévue dans l'ensemble (1), de sorte que la température d'ébullition dudit milieu de travail liquide (5) dans l'ensemble (1) soit inférieure à la température d'ébullition du même liquide à la pression ambiante ;
dans lequel le volume dudit milieu de travail liquide (5) est inférieur à la capacité interne de l'ensemble entier ;
dans lequel l'appareil est configuré de sorte que le chauffage du milieu de travail liquide (5) contenu dans une première chambre (2) de l'ensemble induise un transfert du milieu de travail (5), soit à l'état liquide, soit à l'état vapeur, de ladite première chambre (2) vers une deuxième chambre (3) de l'ensemble, à travers un conduit de communication (4) entre lesdites première chambre (2) et deuxième chambre (3) ;
l'appareil comportant en outre au moins un dispositif de conversion d'énergie (6) agencé dans le conduit de communication (4) et configuré pour transformer l'énergie du milieu de travail (5) traversant l'appareil en une sortie de puissance électrique,
dans lequel ledit dispositif de conversion d'énergie inclut au moins un élément magnétique (7), ledit au moins un élément magnétique étant agencé de manière à entrer en contact direct avec le milieu de travail,
dans lequel ledit au moins un élément magnétique (7) est un élément magnétique rotatif (7) qui est situé dans le conduit de communication (4) et est agencé pour tourner sous la poussée dudit milieu de travail (5) lorsque ledit milieu de travail (5) traverse le conduit de communication (4) pour passer d'une chambre à une autre chambre,
dans lequel l'appareil inclut au moins une bobine ou un solénoïde (16) couplé par induction audit élément magnétique rotatif (7), de sorte qu'une rotation dudit élément magnétique rotatif (7) induise un courant électrique dans la bobine ou le solénoïde (16),
dans lequel ledit au moins un élément magnétique rotatif (7) est configuré pour tourner autour d'un axe (31) qui est perpendiculaire à l'axe (32) de ladite bobine ou dudit solénoïde.

2. Appareil selon la revendication 1, dans lequel ledit au moins un élément magnétique rotatif (7) présente des pales constituées d'un matériau magnétisé ou dans lequel des éléments magnétiques sont placés sur deux pales ou plus de l'élément rotatif.

3. Appareil selon l'une quelconque des revendications précédentes, dans lequel ledit au moins un élément magnétique rotatif (7) est supporté sur une surface intérieure (34) dudit conduit de communication (4) ou est supporté par une barre d'appui installée dans le conduit de communication.

4. Appareil selon l'une quelconque des revendications précédentes dans lequel le conduit de communication (4) inclut des ailettes internes (33) agencées pour diriger le milieu de travail vers le ou les éléments rotatifs.

5. Appareil selon l'une quelconque des revendications précédentes dans lequel ledit au moins un élément magnétique rotatif est associé à une barre de support, ladite barre de support tournant à l'intérieur du conduit de communication et un ou plusieurs engrenages étant agencés sur ladite barre de manière à imposer à l'élément ou aux éléments magnétiques rotatifs une rotation autour d'un axe perpendiculaire au conduit de communication et/ou perpendiculaire à l'axe de la bobine ou du solénoïde enroulé autour du conduit de communication.

6. Appareil selon l'une quelconque des revendications précédentes, ledit conduit de communication (4) présentant une section transversale circulaire, carrée ou rectangulaire, éventuellement avec des bords arrondis pour faciliter l'enroulement de la bobine ou du solénoïde autour du conduit de communication.

7. Appareil selon l'une quelconque des revendications précédentes, dans lequel ledit milieu de travail liquide (5) est un liquide pur ou un mélange liquide et présente un point d'ébullition inférieur au point d'ébullition de l'eau.

8. Appareil selon l'une quelconque des revendications précédentes, dans lequel ledit ensemble (1) est configuré de sorte qu'un ou plusieurs des conduits de communication (4) agissent en tant qu'éléments de liaison et/ou éléments d'appui pour deux des chambres ou plus (2, 3, 8 à 13).

9. Appareil selon l'une quelconque des revendications précédentes, dans lequel l'ensemble (1) est configuré de sorte que le milieu de travail (5) sortant de ladite première chambre (2) à travers un conduit de communication (4) retourne dans la même première chambre (2) soit à travers le même conduit de communication (4), soit à travers un conduit de communication (14) séparé.

10. Appareil selon l'une quelconque des revendications précédentes, dans lequel ledit ensemble (1) inclut plus de deux chambres formant une séquence de chambres, et dans lequel le milieu de travail (5) est transféré à travers les chambres au moyen d'une pluralité d'étapes de transfert, chaque étape étant un transfert d'une première chambre vers une deuxième chambre adjacente à la première dans la séquence, le transfert du milieu de travail (5) étant opéré à la suite du chauffage séquentiel de l'une quelconque des chambres de l'appareil.

11. Appareil selon la revendication 10, dans lequel la séquence de chambres forme un circuit fermé et le procédé est réalisé de manière cyclique tandis que le milieu de travail (5) traverse la séquence de chambres en circuit fermé.

12. Appareil selon l'une quelconque des revendications précédentes, dans lequel une ou plusieurs barrières (15) sont prévues en liaison avec les chambres et/ou avec les conduits de communication (4), lesdites barrières (15) étant actionnées pour empêcher un reflux du milieu de travail (5) d'une chambre vers une chambre précédente.

13. Appareil selon l'une quelconque des revendications précédentes, dans lequel lesdits éléments magnétiques (7) incluent des aimants permanents.

14. Appareil selon l'une quelconque des revendications précédentes, dans lequel le ou les conduits de communication (4) sont constitués d'un matériau présentant une conductivité magnétique appropriée.

15. Appareil selon l'une quelconque des revendications précédentes incluant au moins un conduit de communication (4) dans lequel la bobine ou le solénoïde (16) est enroulé autour dudit conduit, ou la bobine ou le solénoïde constitue ledit conduit de communication (4).

16. Appareil selon l'une quelconque des revendications précédentes, comportant une pluralité de bobines ou de solénoïdes (16), dans lequel au moins certain(e)s des bobines ou des solénoïdes sont reliés électriquement entre eux.

17. Procédé de production d'énergie électrique dans un appareil selon l'une quelconque des revendications précédentes, le procédé comportant :
la fourniture de l'ensemble scellé (1) incluant au moins deux chambres (2, 3) et un conduit de communication (4), dans lequel le conduit de communication (4) est agencé pour assurer une communication fluidique entre lesdites deux chambres (2, 3) ;
la fourniture d'un milieu de travail (5) à l'état liquide contenu dans au moins l'une desdites chambres (2, 3) ;
la formation d'une condition de vide dans l'ensemble (1), de sorte que la température d'ébullition dudit milieu de travail liquide (5) dans l'ensemble soit inférieure à la température d'ébullition du même liquide à la pression ambiante ;
le chauffage du milieu de travail liquide (5) contenu dans une première chambre (2) de l'ensemble de manière à induire un transfert du milieu de travail de ladite première chambre (2) vers une deuxième chambre (3) de l'ensemble (1), à travers le conduit de communication (4) entre ladite première chambre (2) et ladite deuxième chambre (3) ;
la transformation de l'énergie du milieu de travail traversant l'appareil en une sortie de puissance au moyen d'un dispositif de conversion d'énergie (6) agencé dans le conduit de communication (4), dans lequel ledit dispositif (6) inclut au moins un élément magnétique (7) agencé pour entrer en contact direct avec le milieu de travail et pour tourner au contact du milieu de travail ;
ledit au moins un élément magnétique est un élément magnétique rotatif (7) qui est situé dans le conduit de communication (4) et est agencé pour tourner sous la poussée dudit milieu de travail (5) lorsque ledit milieu de travail (5) traverse le conduit de communication (4) pour passer d'une chambre à une autre chambre ;
l'appareil incluant au moins une bobine ou un solénoïde (16) couplé par induction audit élément magnétique rotatif (7), de sorte qu'une rotation dudit élément magnétique rotatif (7) induise un courant électrique dans la bobine ou le solénoïde (16),
dans lequel ledit au moins un élément magnétique rotatif (7) tourne autour d'un axe (31) qui est perpendiculaire à l'axe (32) de ladite bobine ou dudit solénoïde,
dans lequel le milieu de travail (5) est transféré de ladite première chambre (2) vers ladite deuxième chambre (3) à l'état liquide ou à l'état gazeux.

18. Procédé selon la revendication 17, dans lequel, après le chauffage de la première chambre (2) et le transfert du milieu de travail (5) vers la deuxième chambre (3), la deuxième chambre (3) est chauffée et le milieu de travail (5) est transféré de nouveau dans la première chambre (2), et la séquence est répétée de manière cyclique.

19. Procédé selon la revendication 17 ou 18, dans lequel, pendant le procédé, le milieu de travail (5) présente une température inférieure au point de Curie de tout élément magnétique du dispositif de conversion d'énergie (6) pour éviter la démagnétisation.
